# EUROPEAN PATENT APPLICATION

(11) **EP 1 679 221 A2**
(43) Date of publication of application: **12.07.2006**
(21) Application number: 06250134.1
(22) Date of filing: 11.01.2006
(51) Int. Cl.: B60K 37/06

(54) **Display control system for a vehicle**

(30) Priority: 11.01.2005 GB 0500427
(71) Applicant: Mssdesign Limited, Glyme House, Cleveley, Chipping Norton Oxon, OX7 4DY (GB)
(72) Inventor: Shaw-Smith, Mark, Oxon OX7 4DY (GB)
(74) Representative: Clayton-Hathway, Anthony Nicholas

(57) **Abstract**

A display control system for a vehicle comprises: a display including an indicator for selecting each of a plurality of items of the display; and a control device for the display, the control device being located on a steering device, such as a steering wheel, for steering the vehicle. The control device comprises a complete or a partial dial arranged to be rotated actually or virtually to move the indicator across the display to select an item of the display. The device may include a central selection switch.

## Description

The present invention relates to display control systems for vehicles, especially land vehicles, including cars (automobiles), lorries (trucks), vans and buses. However, the invention may also be utilised in vehicles that travel across or through water or air. The invention particularly relates to computer display control systems.

The number of inputs required from the driver of a vehicle to control the full array of functions of the vehicle is ever increasing. Such functions include those relating to in-vehicle entertainment, climate control, satellite navigation, and mechanical functions such as transmission and suspension options, for example. The proliferation of control buttons and switches, and computer display control devices, creates a potential distraction for the driver and causes a significant safety risk. In an effort to improve this situation, many vehicle manufacturers are providing integrated electronic displays using menu-driven command controls, to place the wide array of functions in a single interface. However, the means of controlling the inputs from the driver are themselves exacerbating the problem and creating a safety hazard. This is because the number, the positioning and/or the design of the input controls require a degree of hand-eye coordination from the driver that necessitates the driver transferring his concentration from the act of driving the vehicle, to operating the input control.

This problem has been recognised, and attempted solutions have been proposed. For example, United States Patent No. 6,418,362 B1 discloses an input mechanism mounted on the peripheral grip of a steering wheel, the input mechanism comprising a thumb input pad facing the driver, and finger input buttons on the opposite side of the steering wheel grip, facing away from the driver. The thumb input pad is a small button-like feature that may be manipulated by minor movements of the driver's thumb, and it may be in the form of a joystick, a small disc-shaped actuator, a touch pad, or a trackball. In all cases, the thumb input pad is less than the size of the driver's thumb-print. A drawback of such a thumb input pad is that it can be difficult to control, especially bearing in mind the demands of steering and driving the vehicle, for the very reason that only extremely small movements of the pad are required. Consequently, the nature of the thumb input pad may create another problem of driver distraction due to the specific design of the attempted solution to the problem.

United States Patent No. 6,571,154 B2 discloses a scroll switch in the form of a rotatable wheel provided on a steering wheel such that the axis of rotation of the rotatable wheel lies in the plane of the steering wheel. The scroll switch may therefore be scrolled by moving the thumb up or down on the scroll switch (in the same way as a scroll wheel of a computer mouse). The scroll switch is provided on a surface of the steering wheel facing the driver; additionally, a selection switch to be pressed by the driver's finger is provided on the opposite surface of the steering wheel, facing away from the driver. An ergonomic problem associated with this attempted solution is that the direction of rotation of the scroll switch is perpendicular to the direction of rotation of the steering wheel itself. This may be a problem because the driver's brain is presented with conflicting spatial mapping and motor control demands (due to the perpendicular directions of rotation of the steering wheel and the scroll switch), thus causing potential mental concentration problems. Thus, while the scroll switch might at first sight appear to be an ergonomically sound solution, it too presents its own problems.

The present invention seeks to provide an improved display control system for a vehicle, and in particular an improved control device for the system that has enhanced ergonomics both in terms of its position relative to the driver and the vehicle's driving controls, and in terms of how it functions, i.e. how the driver operates the control device. In particular, the invention seeks to provide such a control device that provides a high degree of control to the driver of a vehicle that is more compatible with the mental and physical requirements of driving the vehicle, and that consequently presents lower demands of concentration from the driver than is the case with known control devices.

Accordingly, a first aspect of the present invention provides a display control system for a vehicle, comprising:
(i) a display including an indicator for selecting each of a plurality of items of the display; and
(ii) a control device for the display, the control device being located on a steering device for steering the vehicle;
wherein the control device comprises a complete or a partial dial arranged to be rotated actually or virtually to move the indicator across the display to select an item of the display.

A second aspect of the invention provides a control device for a display of a vehicle, the control device being located or locatable on a steering device of the vehicle, and comprising a complete or a partial dial arranged to be rotated actually or virtually to move an indicator of a display across the display, to select an item of the display.

It is to be understood that any or all features of the second aspect of the invention may be a feature of the first aspect of the invention, and vice versa.

The invention has the advantages that because the display control device is both located (at least in use) on the steering device (e.g. a steering wheel) and has the form of a dial, it is found by the inventor to be ergonomically optimised for the driver. This is because the combination of the location on the steering device, and the rotational operation (e.g. by a driver's finger) preferably being generally in the plane of the steering device and generally in the same sense as the steering device (i.e. about a rotational axis generally perpendicular to the driver), have been found by the inventor in general to require the smallest amount of mental concentration on the part of the driver. Consequently, the driver is generally able to operate the display control system with minimal distraction from the requirements of driving the vehicle, thereby providing very significant safety improvements.

Preferred and optional features of the invention are described below and in the dependent claims.

Examples of some preferred embodiments of the invention will now be described, by way of example, with reference to the accompanying drawings, of which:
Figure 1 is a schematic illustration showing a vehicle steering wheel with a display control device according to the invention located thereon at its rotational centre-point facing the driver;
Figure 2 is a schematic illustration showing a vehicle steering wheel with display control devices according to the invention located thereon at two opposite generally peripheral locations facing the driver;
Figure 3 is a schematic illustration showing a vehicle steering wheel with display control devices according to the invention located thereon at two opposite generally peripheral locations facing away from the driver;
Figure 4 is a schematic illustration similar to that of Figure 1, but in which the display control device according to the invention includes a plurality of single direction or single function buttons;
Figure 5 is a schematic illustration showing a vehicle steering wheel with a display control device according to the invention comprising a partial dial located at a generally peripheral location on the steering wheel facing the driver;
Figure 6 is a schematic illustration showing a vehicle steering wheel with a display control device according to the invention located thereon to the side of a central region of the steering wheel; and
Figure 7 is a schematic illustration similar to that of Figure 1, but in which the display control device comprises a manufacturer's badge, e.g. as a "select" button.

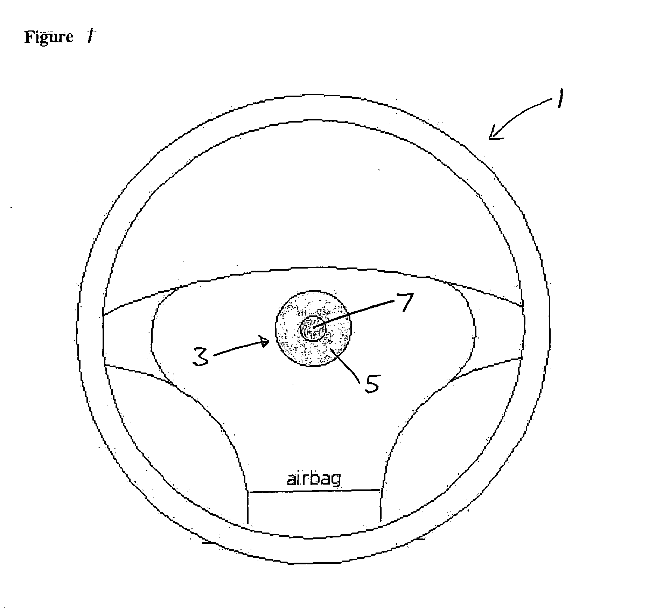

Figure 1 is a schematic illustration showing a vehicle steering wheel 1 with a display control device 3 according to the invention located on the steering wheel at its rotational centre-point and facing the driver. The display control device 3 comprises a dial 5 arranged to be rotated actually or virtually to move an indicator (e.g. a cursor) of a computer display screen (not shown) across the display screen to select an item of the display. The control device 3 also includes a selection input button 7 arranged to be pressed to input the selection of an item on the display, once the required item has been indicated by the cursor or other indicator.

As explained above, the control device according to the invention has the advantage that because it is located on the steering wheel and has the form of a dial, it is generally ergonomically optimised for the driver. This is because the combination of the location of the device on the steering wheel and the device comprising a rotational dial lying generally in the plane of the steering wheel (and thus having an axis of rotation generally parallel to, or coaxial with, the axis of rotation of the steering wheel) has been found by the inventor to present a very easily and naturally operated device for the driver. It is thought by the inventor that at least one possible explanation for the apparent ergonomic optimisation provided by the invention is due to a "mimicking" of the steering wheel by the display control device. That is, because the steering wheel and the display control device involve the same type and orientation of rotational movement in order to perform their respective control functions (albeit the display control device being much smaller in size than the steering wheel) the driver's brain may be able more easily and/or quickly to flit from controlling one to controlling the other. It is possible that the spatial mapping used by the driver's brain in controlling the steering wheel and the display control device may involve the same or similar regions for the brain, for example. Consequently, the driver is generally able to operate the display control system with minimal distraction from the requirements of driving the vehicle, thereby providing very significant safety improvements. It is to be understood, however, that the possible reasons stated herein for the apparent ergonomic optimisation provided by the invention are hypotheses on the part of the inventor, and the truth or falsehood of such hypotheses has no bearing on the scope of the invention or its validity.

The display control device may be a known device of the type used in some hand-held portable music players, for example. United States Patent Application No. 2003/0095096 A1 (the entire disclosure of which is incorporated herein by reference) discloses a portable music player incorporating a suitable control device, for example.

As indicated above, the control device 3 comprises an outer dial 5 arranged to be rotated actually or virtually, and a central selection input button 7 arranged to be depressed actually or virtually. The rotation of the dial 5, e.g. by means of a finger of the driver of the vehicle, moves a cursor or other indicator across (e.g. up/down or from side-to-side) a computer display screen in order sequentially to highlight (in any suitable way) each of a plurality of items displayed on the screen. Once the required item has been highlighted, it may be selected by pressing the selection input button 7.

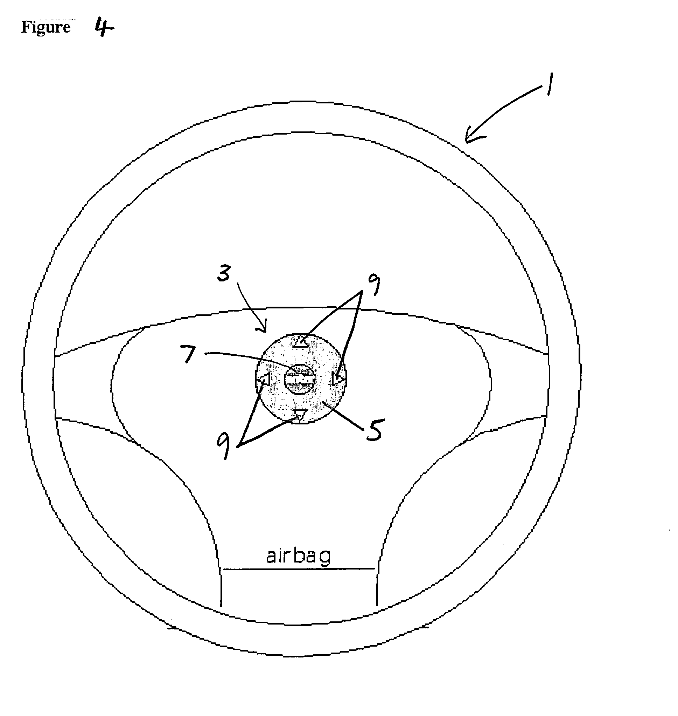

By "actual or virtual" rotation is meant that the dial (or one or more components of it) may be physically rotated, or the dial may comprise an electronic input pad or the like that detects the rotation of the driver's finger (etc.) and thus is only "virtually" rotated. Similarly with the selection input button 7 (and any single direction buttons - see Figure 4), the button may be physically depressed when pressed, or it may be a "virtual button" comprising an electronic input pad or the like, that detects the pressure of the driver's finger.

The display screen is not shown in the drawings, but may be of known type, and may for example be mounted on a dashboard of the vehicle or situated at some other convenient location. The display screen may alternatively be a "head-up" display, i.e. a virtual display projected in front of the driver, for example. As explained above, the display may indicate any of a plurality of functions, including (but not necessarily limited to): in-vehicle entertainment and/or in-vehicle climate control and/or satellite navigation and/or mechanical functions of the vehicle, for example.

The display control device will normally be connected to the display via one or more electrical and/or optical conductors (e.g. wires, cables and/or optical fibres). Preferably such conductors extend from the rear of the steering wheel (or other steering device) to the display, e.g. adjacent to the steering column. Alternatively, however, the connection between the control device and the display may be wireless, for example by means of microwave signals or other electromagnetic signals (e.g. radio waves or infra red signals).

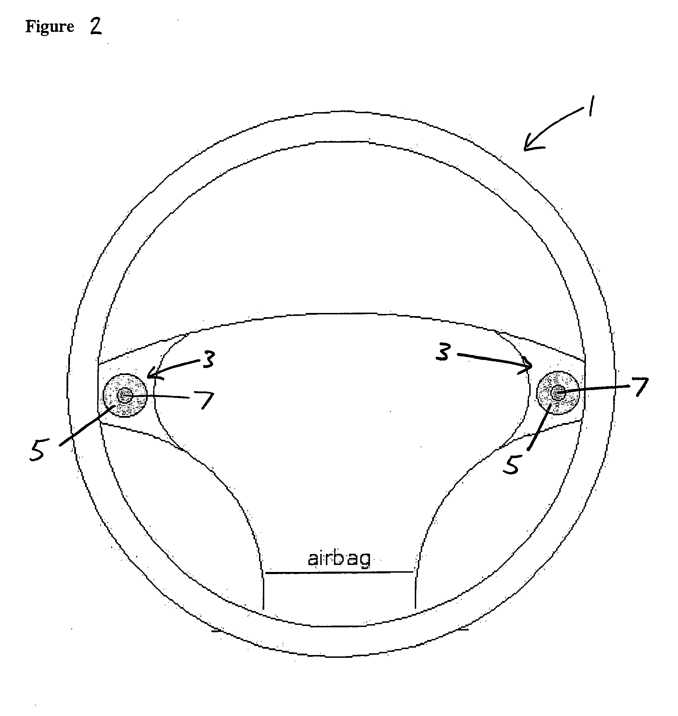

Figure 2 is a schematic illustration showing a vehicle steering wheel 1 having two display control devices 3 according to the invention located on it at two opposite generally peripheral locations facing the driver. Such an arrangement has the advantages that the control devices 3 are located close to the driver's hands, and they are situated for left- or right-handed use.

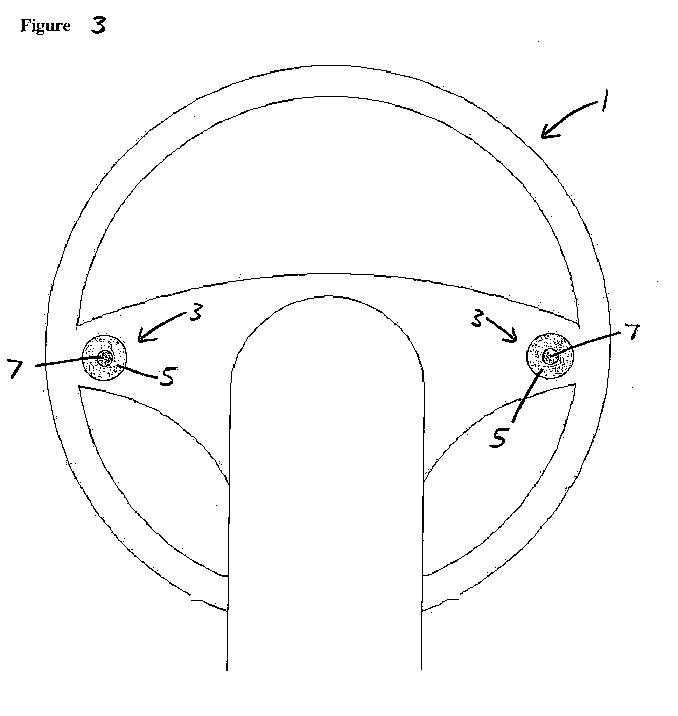

Figure 3 is a schematic illustration showing the rear of a vehicle steering wheel 1 having two display control devices 3 according to the invention located on it at two opposite generally peripheral locations facing away from the driver.

Figure 4 is a schematic illustration similar to that of Figure 1, but in which the display control device 3 according to the invention includes a plurality of single direction or single function buttons 9 located at or near the top, bottom and two opposite sides of the dial 5. The single direction or single function buttons 9 may, for example, take the form of arrows (as illustrated) and may move the cursor or other indicator across the display in a specified single direction when actually or virtually depressed by the driver or may be used for defined functions or shortcuts; to call up a master menu for example.

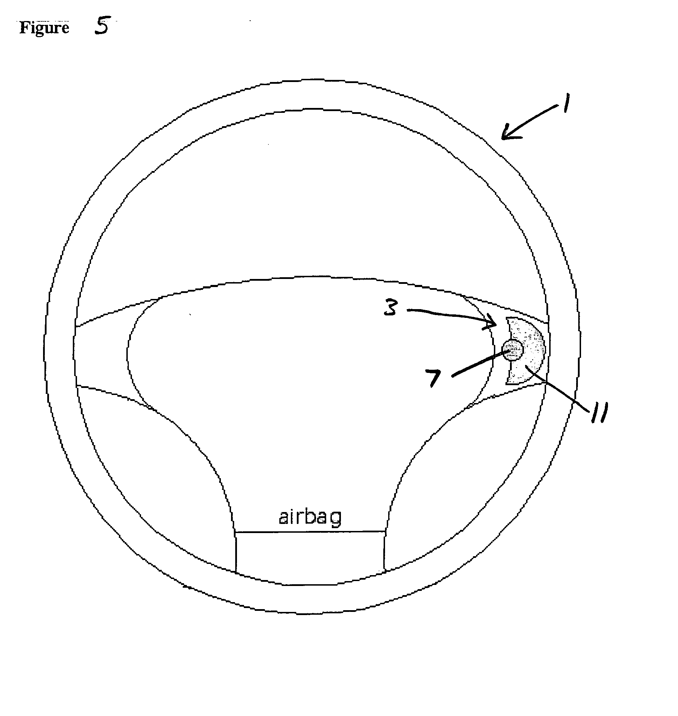

Figure 5 is a schematic illustration showing a vehicle steering wheel 1 with a display control device 3 according to the invention comprising a partial dial 11 located at a generally peripheral location on the steering wheel facing the driver. The partial dial 11 permits actual or virtual partial rotation (i.e. rotation around less than 360 degrees of arc). The device 3 includes a selection input button 7 located substantially on the axis of rotation about which the partial dial is actually or virtually rotated.

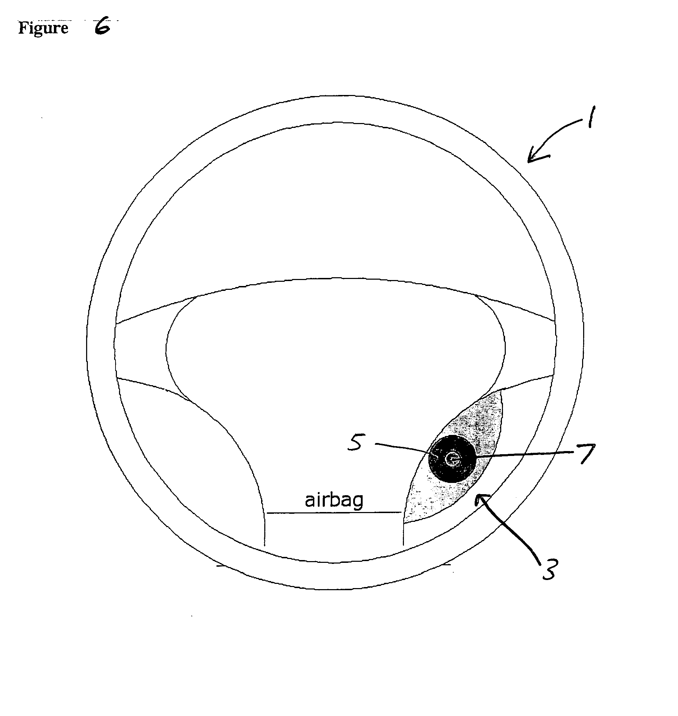

Figure 6 is a schematic illustration showing a vehicle steering wheel with a display control device 3 according to the invention located on it, to the side of a central region of the steering wheel.

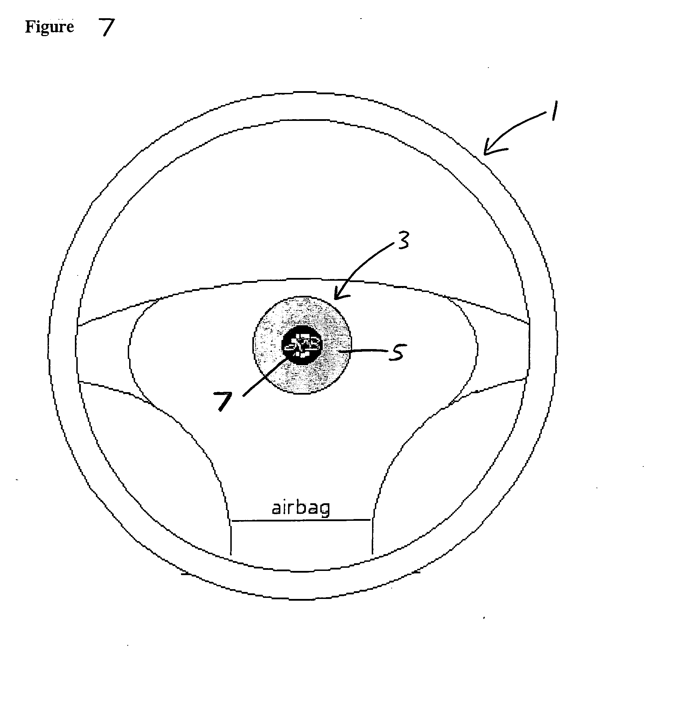

Figure 7 is a schematic illustration similar to that of Figure 1, but in which the display control device comprises at least part of a manufacturer's badge, e.g. the logo of the vehicle manufacturer. Such an ornament may also function as the central "select" button, for example.

## Claims

1. A display control system for a vehicle, comprising:
(i) a display including an indicator for selecting each of a plurality of items of the display; and
(ii) a control device for the display, the control device being located on a steering device for steering the vehicle;
wherein the control device comprises a complete or a partial dial arranged to be rotated actually or virtually to move the indicator across the display to select an item of the display.

2. A system according to claim 1, in which the control device includes a selection input button arranged to be pressed to input the selection of an item of the display.

3. A system according to claim 2, in which the selection input button is located substantially in the centre of the dial, preferably substantially on an axis of rotation about which the dial or partial dial is actually or virtually rotated.

4. A system according to any preceding claim, in which the control device includes one or more single direction buttons, whereby the indicator may be moved across the display in a specified single direction by actually or virtually depressing a specified single direction button.

5. A system according to any preceding claim, in which the control device is located on a surface of the steering device in use, e.g. facing the driver or alternatively facing away from the driver.

6. A system according to any preceding claim, in which the steering device comprises a steering wheel.

7. A system according to any preceding claim, in which the control device is located substantially in a centre of the steering device, preferably substantially on an axis of rotation of the steering device.

8. A system according to any preceding claim, in which an axis of rotation about which the dial of the control device is rotated actually or virtually, is substantially parallel to, or substantially coaxial with, an axis of rotation of the steering device.

9. A system according to any preceding claim, in which a said control device is located at or near a periphery of the steering device.

10. A system according to any preceding claim, in which the control device is an integral part of the steering device.

11. A system according to any one of claims 1 to 9, in which the control device is distinct from, and attachable to, the steering device.

12. A system according to any preceding claim, in which the display comprises a computer display, e.g. in which the indicator comprises a cursor or graphical selection highlight.

13. A system according to any preceding claim, including electrical and/or optical conductors interconnecting the display and the control device.

14. A system according to any one of claims 1 to 12, in which the display and the control device are interconnected by microwave or other electromagnetic means.
